# EUROPÄISCHE PATENTANMELDUNG

(11) **EP 1 936 763 A2**
(43) Veröffentlichungstag der Anmeldung: **25.06.2008**
(21) Anmeldenummer: 07024711.9
(22) Anmeldetag: 20.12.2007
(51) Int. Cl.: H02G 3/04

(54) **Versorgungsstrang**

(30) Priorität: 21.12.2006 DE 102006062402
(71) Anmelder: GfP (Gesellschaft für Produktivitätsplanung und Produktentwicklung)mbH, 74613 Öhringen (DE)
(72) Erfinder: Schaffitzel, Hermann, 74613 Öhringen (DE)
(74) Vertreter: Dauster, Katja

(57) **Zusammenfassung**

Die Erfindung betrifft einen Versorgungskanal zur Verlegung mindestens einer Versorgungs- und/oder Datenleitung (4) umfassend mindestens zwei Spanten (2), die quer zu einer Längsrichtung der Versorgungs-und/oder Datenleitung (4) angeordnet sind und jeweils mindestens ein Haltemittel (20) für die Versorgungs- und/oder Datenleitung (4) aufweisen, so dass die mindestens eine Versorgungs- und/oder Datenleitung (4) zwischen den Spanten (2) verlegbar ist, und mindestens ein Abdeckelement (3), welches an den Spanten (2) zur Abdeckung der zwischen den Spanten (2) verlegten Versorgungs- und/oder Datenleitung (4) zerstörungsfrei lösbar angebracht ist. Die Erfindung betrifft weiter ein Verfahren zur Bereitstellung mindestens eines Mediums in einem Raum.

## Beschreibung

Die Erfindung betrifft einen Versorgungskanal zur Führung mindestens einer Versorgungs- und/oder Datenleitung an einer Raumdecke, sowie ein Verfahren zur Bereitstellung mindestens eines Mediums in einem Raum.

Um einen Raum, insbesondere einen Unterrichtsraum in einer Schule oder dergleichen, flexibel nutzen zu können, ist es vorteilhaft, Medien, wie Strom, Druckluft, Wasser oder dergleichen, getrennt von Möbeln des Raums zur Verfügung zu stellen. Dabei hat sich eine deckenseitige Medienversorgung als vorteilhaft erwiesen.

Für eine deckenseitige Medienversorgung ist beispielsweise eine sogenannte Mediendecke bekannt, wobei die Versorgungsleitungen für Gas, Strom, Zu- und Abluft oder dergleichen und/oder Datenleitungen an der Decke verlegt und bei Bedarf von der Decke abgegriffen werden können. Durch Blenden oder andere Abdeckelemente können die Elemente vor ungewünschten Zugriffen und/oder vor Blicken geschützt werden.

Daneben sind sogenannte Medienversorgungssysteme mit Kanälen bekannt. Ein derartiges Medienversorgungssystem ist beispielsweise aus der DE 103 14 685 A1 bekannt. Der Kanal zur Aufnahme von Versorgungs- und/oder Datenleitungen ist dabei aus Teilstücken zusammengesetzt und mittels Hängehaltern unter der Decke eines Raums oberhalb der Greifhöhe einer normal großen Person anbringbar. Der in der DE 103 14 685 A1 offenbarte Kanal weist zwei in einem Abstand nebeneinander angeordnete Profile auf, die mit einem oberen und/oder unteren Deckel zu einem geschlossenen oder nach oben offenen Kanal ergänzt sind. Versorgungs- und/oder Datenleitungen sind in dem Kanal sicher vor einem ungewünschten Zugriff geschützt und durch den Kanal an eine geeignete Stelle des Raums geführt. Der Kanal kann bewegliche Bauteile tragen, welche in Greifhöhe einer normal großen Person beweglich sind, wobei durch diese Bauteile ein Abgreifen der in dem Kanal geführten Medien wie Luft, Wasser, Strom, Daten oder ähnliche möglich ist.

Aus der DE 101 27 272 A1 sind weiter Medientraversen bekannt, in welchen Versorgungs- und/oder Datenleitungen führbar sind. Die Medientraversen oder Tragelemente umfassen ein Profil aus einem im Wesentlichen V-förmig gekantetem Blech, wobei an der Außenseite des Profils Halter für Daten- und/oder Versorgungsleitungen vorgesehen sind. Das Profil ist nach außen mit Blenden abgedeckt, welche die Versorgungs- und/oder Datenleitungen überdecken.

Es ist Aufgabe der vorliegenden Erfindung, einen Versorgungskanal für mindestens eine Versorgungs- und/oder Datenleitung zu schaffen, durch welchen die Versorgungs- und/oder Datenleitungen an einer Raumdecke sicher geführt werden können, wobei ein Zugriff auf die Versorgungs- und/oder Datenleitung einfach möglich ist und der Versorgungskanal ein geringes Gewicht aufweist. Es ist weiter Aufgabe der Erfindung, ein Verfahren zur Bereitstellung eines Mediums in einem Raum zu schaffen.

Diese Aufgabe wird gelöst durch einen Versorgungskanal zur Verlegung mindestens einer Versorgungs- und/oder Datenleitung umfassend mindestens zwei Spanten, die quer zu einer Längsrichtung der Versorgungs- und/oder Datenleitung angeordnet sind und jeweils mindestens ein Haltemittel für die Versorgungs- und/oder Datenleitung aufweisen, so dass die mindestens eine Versorgungs- und/oder Datenleitung zwischen den Spanten verlegbar ist, und mindestens ein Abdeckelement, welche an den Spanten zur raumseitigen Abdeckung der zwischen den Spanten verlegten Versorgungs- und/oder Datenleitung zerstörungsfrei lösbar angebracht ist. Als quer zu einer Längsrichtung wird dabei eine Richtung bezeichnet, welche etwa rechtwinklig zu der Längsrichtung steht.

Durch eine sogenannten Rumpf- Konstruktion umfassend Spanten ist eine besonders leichte Bauform gegeben. Die Spanten sind in geeigneten Abständen angebracht, so dass die Versorgungs- und/oder Datenleitungen zwischen den Spanten nicht oder zumindest nicht die Funktion oder Optik beeinträchtigend durchhängen. Der Abstand kann dabei in Abhängigkeit der aufzunehmenden Versorgungsleitung gewählt werden. Die Spanten sind beispielsweise aus Kunststoff oder Leichtmetall gefertigt, um eine optimale Gewichtsreduzierung zu erzielen.

Das Abdeckelement schützt die Versorgungs- und/oder Datenleitungen vor ungewünschten Zugriffen und/oder Blicken. In einer Ausführungsform ist das Abdeckelement mit den Spanten verrastet. In anderen Ausführungsform ist eine Verbindung mittels Schrauben vorgesehen, wobei es beispielsweise durch Gestaltung eines Spezial-Schraubenkopfes möglich ist, einen Zugriff nur durch korrespondierende Spezialwerkzeuge zu erlauben. In noch anderen Ausgestaltungen sind Riegel und Schlösser vorgesehen, um einen unerwünschten Zugriff zu verhindern.

In einer Ausgestaltung des Versorgungskanals sind die Spanten durch mindestens einen Längsträger verbunden. Durch den Längsträger ist der Abstand zwischen den Spanten festlegbar und der Versorgungskanal ist für eine Montage an oder unterhalb der Decke leichter handhabbar.

In Weiterbildung der Erfindung weist der Längsträger mindestens ein Befestigungsmittel für die Versorgungs- und/oder Datenleitung auf. Die Versorgungs- und/oder Datenleitung wird dadurch zwischen den Spanten ebenfalls gestützt, so dass ein Abstand der Spanten größer wählbar ist, ohne dass es zum Durchhängen der Leitungen kommt. Die Leitungen sind in einer Ausgestaltung derart an dem Längsträger befestigt, dass ein Zugriff auf die Leitungen durch die Längsträger nicht oder nur unwesentlich versperrt wird. Als Befestigungsmittel ist beispielsweise eine Art Kabelbinder denkbar.

In einer Ausgestaltung des Versorgungskanals ist mindestens ein Hängehalter vorgesehen, durch den der Versorgungskanal unterhalb einer Decke eines Raums anbringbar ist. Der Hängehalter ist mit den Spanten und/oder mit dem Längsträger verbunden. In anderen Ausgestaltungen der Erfindung ist der Versorgungskanal auf Stützen angeordnet.

In einer weiteren Ausgestaltung des Versorgungskanals ist das Haltemittel für die Versorgungsleitung als Durchgangsöffnung in den Spanten gestaltet. Die Leitungen sind dabei auf einfache Weise in den Spanten verlegbar. Für verschiedene Leitungen sind in einer Ausgestaltung verschiedene Durchgangsöffnungen vorgesehen, so dass die Leitungen geordnet sind. In anderen Ausgestaltungen weist die Durchgangsöffnung Positioniermittel auf, durch welche die Leitungen in der Durchgangsöffnung positioniert sind. Die Durchgangsöffnungen sind in einer Ausgestaltung als Durchgangslöcher mit einer geschlossenen Kontur gestaltet. In anderen Ausgestaltungen ist die Durchgangsöffnung als Nut mit einer geöffneten Kontur gestaltet, so dass ein Einlegen der Leitungen in die Durchgangsöffnungen vereinfacht ist.

In einer weiteren Ausgestaltung ist das Haltemittel als Klemmmittel gestaltet, durch welche die Versorgungs- und/oder Datenleitung an den Spanten verrastbar ist. Durch ein Verrasten ist eine einfache und zerstörungsfrei lösbare Befestigung möglich.

In einer weiteren Ausgestaltung der Erfindung ist an dem Versorgungskanal eine Lagereinrichtung vorgesehen, an welche mindestens ein Medienelement anbringbar ist. Als Medienelement wird dabei ein Element bezeichnet, durch welches Medien wie Strom, Wasser, Druckluft, Daten oder dergleichen, einem Nutzer über geeignete Anschlüsse wie Steckdosen, Hähne, etc. zur Verfügung gestellt werden. Das Medienelement ist vorzugsweise derart an dem Versorgungskanal anbringbar, dass die Anschlüsse in Greifhöhe eines normal großen Nutzers stehend oder sitzend erreichbar sind. Das Medienelement kann verschwenkbar und/oder teleskopierbar gestaltet sein, so dass das Medienelement bedarfsweise aus dem Greifbereich des Nutzers bewegbar ist.

In weiterer Ausgestaltung der Erfindung ist die Lagereinrichtung als mindestens eine Führungsschiene gestaltet, an welcher das Medienelement verschieblich anbringbar ist. Das Medienelement ist dabei bedarfsweise in einen Nutzungsbereich verschieblich und/oder aus dem Nutzungsbereich verschieblich. Dadurch ist eine flexible Nutzung eines Raums möglich.

In einer weiteren Ausgestaltung des Versorgungskanals ist die Lagereinrichtung in Querrichtung des Versorgungskanals betrachtet mittig angeordnet. Durch die mittige Anordnung der Lagereinrichtung ist eine gute beidseitige Führung der Lagereinrichtung möglich.

In einer weiteren Ausgestaltung des Versorgungskanals sind die Spanten spiegelsymmetrisch bezüglich einer Mittelachse gestaltet. Die spiegelsymmetrische Gestaltung ermöglicht eine einfache Verarbeitung der Spanten zu einem Versorgungskanal. Zudem ist eine gute Optik gegeben.

In Weiterbildung des Versorgungskanals sind Lichtelemente raumseitig an dem Versorgungskanal anbringbar. Die Lichtelemente sind dabei an die Versorgungsleitung anschließbar.

Die Aufgabe wird weiter gelöst durch ein Verfahren zur Bereitstellung mindestens eines Mediums in einem Raum, wobei in dem Raum unterhalb der Decke ein erfindungsgemäßer Versorgungskanal angebracht wird. Durch den Versorgungskanal ist eine gute und sichere Medienversorgung des Raums gewährleistet.

In einer Ausgestaltung des Verfahrens wird der Versorgungskanal quer, d.h. in einem Winkel von ca. 90°, zu einer Leitungsrichtung in einem an den Raum angrenzenden Flur angebracht. Die in dem Versorgungskanal angeordneten Leitungen sind dabei durch geeignete Abzweigelemente mit den im Flur verlegten Leitungen verbindbar.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1: eine perspektivische Darstellung eines ersten Ausführungsbeispiels eines Versorgungskanals,
- Fig. 2: eine perspektivische Darstellung eines zweiten Ausführungsbeispiels eines Versorgungskanals und
- Fig. 3: eine schematische Darstellung eines Raums mit Versorgungskanälen.

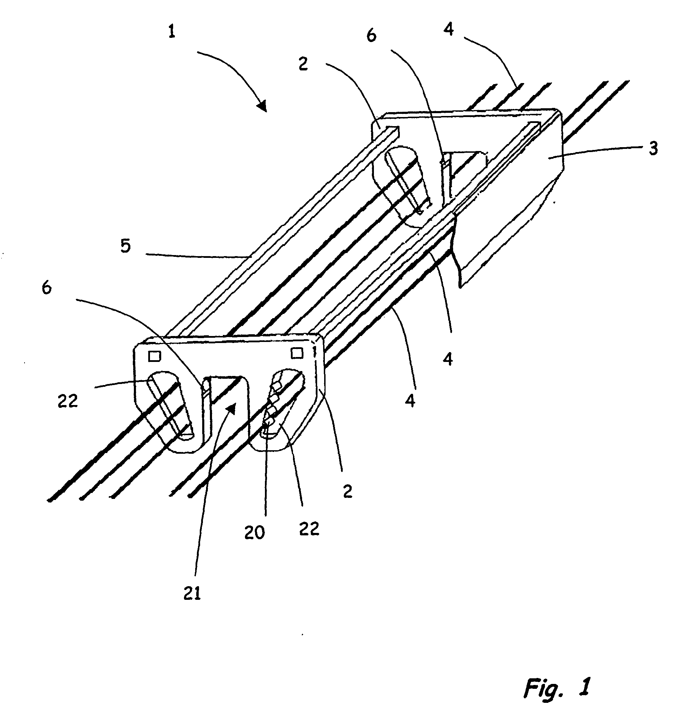

Fig. 1 zeigt schematisch ein erstes Ausführungsbeispiel eines Versorgungskanals 1 zur Führung von Versorgungs- und/oder Datenleitungen 4. Der Versorgungskanal 1 umfasst Spanten 2, die quer zu einer Längsrichtung der Versorgungs- und/oder Datenleitungen 4 angeordnet sind.

In der dargestellten Ausführungsform sind die Spanten 2 spiegelsymmetrisch gestaltet, umfassend eine mittlere Ausnehmung 21 und zwei beidseitig der mittleren Ausnehmung 21 angeordnete Durchgangsöffnungen 22. In den Durchgangsöffnungen 22 sind Haltemittel 20 angeordnet. In dem dargestellten Ausführungsbeispiel sind jeweils vier Haltemittel 20 in jeder Durchgangsöffnung 22 vorgesehen. In anderen Ausgestaltungen sind mehr oder weniger Haltemittel 20 vorgesehen. Durch die Haltemittel 20 ist jeweils eine Versorgungs- und/oder Datenleitung 4 an einem Spant 2 befestigbar. Die Versorgungs- und/oder Datenleitungen 4 sind über die Haltemittel 20 derart an den Spanten 2 befestigbar, dass sie zwischen den Spanten 2 verlegt werden. Die Haltemittel 20 sind beispielsweise als Klemmmittel gestaltet, durch welche die Leitungen 4 lösbar mit den Spanten 2 verrastet werden.

Bei einer abgewandelten Ausführungsform sind in den Spanten 2 anstelle von geschlossenen Durchgangsöffnungen 22 nach außen offene Öffnungen vorgesehen, die vorzugsweise seitlich nach außen offen sind.

An den Spanten 2 ist ein nur teilweise dargestelltes Abdeckelement 3 befestigbar, so dass die zwischen den Spanten 2 geführten Versorgungs- und/oder Datenleitungen 4 durch das Abdeckelement 3 vor ungewünschten Zugriffen und/oder Blicken geschützt sind. Das Abdeckelement 3 ist beispielsweise mittels nicht dargestellter Rastmittel mit den Spanten 2 verrastbar und/oder mittels nicht dargestellter Schrauben mit den Spanten 2 verschraubbar.

In dem dargestellten Ausführungsbeispiel sind die Spanten 2 über Längsträger 5 miteinander verbunden. Die Länge der Längsträger 5 ist in der Darstellung gleich dem Abstand der Spanten 2 in Längsrichtung. In anderen Ausgestaltungen der Erfindung ist die Länge größer als der Abstand, so dass jeweils mehr als zwei Spanten über einen Längsträger 5 miteinander verbunden werden können. Die Längsträger 5 ermöglichen ein einfaches Handhaben des Versorgungskanals 1 im unmontierten Zustand. Der Versorgungskanal 1 ist über nicht dargestellte Hängehalter mit einer Raumdecke verbindbar. Die Hängehalter können hierfür an den Längsträgern 5 und/oder an den Spanten 2 angreifen.

An der mittigen Ausnehmung 21 ist eine Lagereinrichtung 6 vorgesehen, durch welche ein in Fig. 1 nicht dargestelltes Medienelement an dem Versorgungskanal 1 anbringbar ist. Das Medienelement weist Anschlüsse auf, durch welche einem Schüler und/oder einem anderen Benutzer das Medium, d.h. beispielsweise Gas, Wasser, Luft, Strom oder auch eine Datenleitung, zur Verfügung gestellt wird. Als Anschlüsse sind beispielsweise handelsübliche Steckdosen, Armaturen etc. denkbar. Die Medienelemente sind mit den Versorgungs- und/oder Datenleitungen 4 an dem Versorgungskanal 1 auf einfache Weise verbindbar.

Die dargestellten Spanten 2 sind spiegelsymmetrisch mit einer Rumpfform. In anderen Ausgestaltungen sind andere Formen denkbar, welche beispielsweise nur einen einseitigen Anschluss von Leitungen 4 ermöglichen.

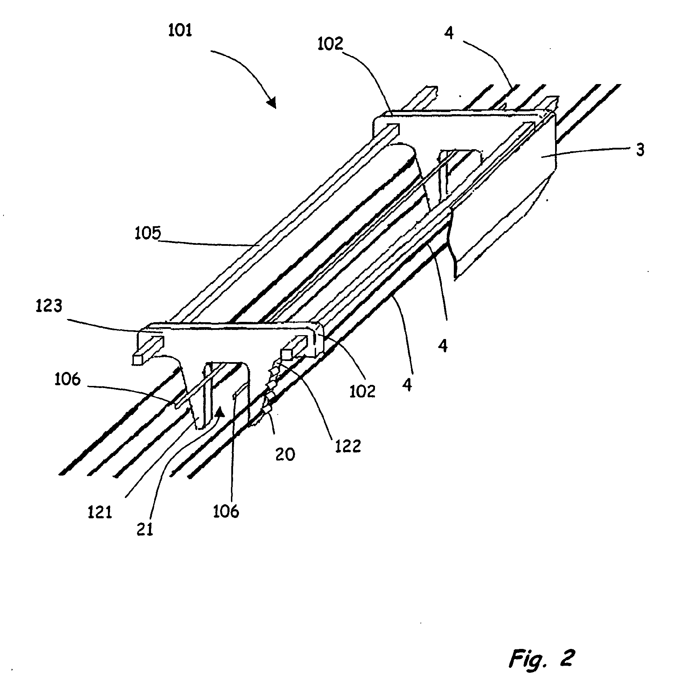

Fig. 2 zeigt ein zweites Ausführungsbeispiel eines Versorgungskanals 101. Der Versorgungskanal 101 entspricht im Wesentlichen dem Versorgungskanal 1 gemäß Fig. 1 und für gleiche Bauteile werden einheitliche Bezugszeichen verwendet. Auf eine detaillierte Beschreibung dieser Bauteile wird verzichtet. Der Versorgungskanal 101 umfasst Spanten 102, welche durch Längsträger 105 miteinander verbunden sind. Die Länge der Längsträger 105 ist dabei größer als der Abstand der Spanten 102. Die Spanten 102 sind im Wesentlichen T-förmig gestaltet, umfassend einen Längsbalken 121 und einen Querbalken 123. An Außenseiten 122 des Längsbalkens 121 sind die Haltemittel 20 zum Befestigen der Versorgungs- und/oder Datenleitungen 4 vorgesehen. Für einen vereinfachten Zugriff auf die Haltemittel 20 sind die Außenseiten 122 vorzugsweise wie dargestellt mit einer Schräge gestaltet, so dass die Breite des Längsbalkens 121 zu dem Querbalken 123 hin zunimmt.

In dem Längsbalken 121 des dargestellten Ausführungsbeispiels ist weiter eine Ausnehmung 21 vorgesehen. In der mittigen Ausnehmung 21 sind Führungsschienen 106 angeordnet, durch welche ein nicht dargestelltes Medienelement verschieblich an dem Versorgungskanal 101 anbringbar ist.

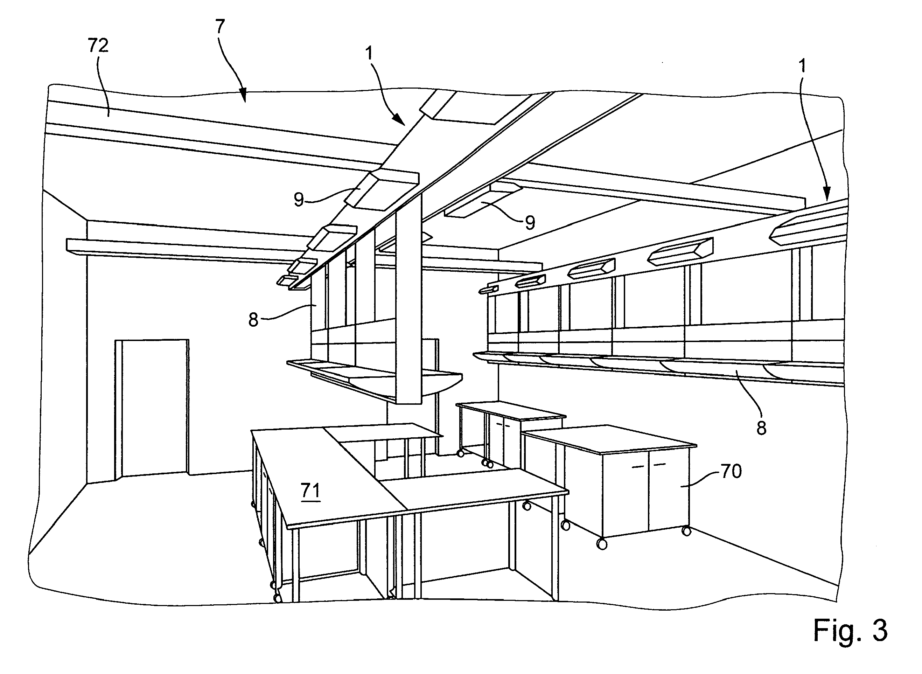

Fig. 3 zeigt schematisch einen Arbeitsraum 7, in welchem verschiedene Medien mittels Versorgungskanälen 1 und daran angebrachten Medienelementen 8 einem Nutzer zur Verfügung gestellt werden.

Der Raum 7 ist beispielsweise ein Unterrichtsraum in einer Schule. In dem Unterrichtsraum 7 sind rollbare Schränke 70 und Tische 71 vorgesehen, durch welche der Raum individuell bestückbar ist. Die Versorgungskanäle 1 verlaufen dabei quer zu einer Leitungsrichtung in einem an den Raum 7 angrenzenden, nicht dargestellten Flur. Die Versorgungskanäle 1 sind durch nicht dargestellte Hängehalter an einer schematisch dargestellten Raumdecke befestigbar. In dem dargestellten Ausführungsbeispiel erfolgt die Befestigung über Traversen 72. In anderen Ausgestaltungen sind keine Traversen 72 vorgesehen.

Die Medienelemente 8 sind vorzugsweise verschieblich an den Versorgungskanälen 1 angebracht, so dass bei einem Nichtgebrauch die Medienelemente an einem Ende des Raums 7 platzsparend verstaubar sind.

In anderen Ausgestaltungen der Erfindung sind schwenkbare und/oder teleskopierbare Medienelemente an den Versorgungskanälen 1 angeordnet. Die an den Medienelementen 8 vorgesehenen Anschlüsse zur Bereitstellung der Medien sind dadurch beispielsweise aus der Greifhöhe eines normal großen Schülers heraus bewegbar, um so einen Missbrauch durch den Schüler zu verhindern.

An den Versorgungskanälen 1 sind Lichtelemente 9 raumseitig angebracht, welche über den Versorgungskanal 1 mit Strom versorgbar sind. Auf eine weitere Beleuchtung des Raums durch herkömmliche Deckenleuchten kann verzichtet werden.

Der erfindungsgemäße Versorgungskanal 1 ermöglicht einen leichten Zugriff auf die Versorgungs- und/oder Datenleitungen durch Abnahme der Abdeckelemente 3, so dass Medienelemente 8 oder andere Vorrichtungen einfach mit den Versorgungsleitungen 4 verbindbar sind. Der Versorgungskanal 1 ermöglicht so eine individuelle Versorgung eines Raums 7 mit Medien, wobei eine Medienversorgung bei einer Umgestaltung des Raums 7 an die Umgestaltung auf einfache Weise anpassbar ist.

## Patentansprüche

1. Versorgungskanal zur Verlegung mindestens einer Versorgungs-und/oder Datenleitung (4) umfassend
- mindestens zwei Spanten (2), die quer zu einer Längsrichtung der Versorgungs- und/oder Datenleitung (4) angeordnet sind und jeweils mindestens ein Haltemittel (20) für die Versorgungs-und/oder Datenleitung (4) aufweisen, so dass die mindestens eine Versorgungs- und/oder Datenleitung (4) zwischen den Spanten (2) verlegbar ist, und
- mindestens ein Abdeckelement (3), welches an den Spanten (2) zur Abdeckung der zwischen den Spanten (2) verlegten Versorgungs- und/oder Datenleitung (4) zerstörungsfrei lösbar angebracht ist.

2. Versorgungskanal nach Anspruch 1, **dadurch gekennzeichnet, dass** die Spanten (2) durch mindestens einen Längsträger (5) verbunden sind.

3. Versorgungskanal nach Anspruch 2, **dadurch gekennzeichnet, dass** der Längsträger (5) mindestens ein Befestigungsmittel für die Versorgungs- und/oder Datenleitung (4) aufweist.

4. Versorgungskanal nach Anspruch 1, 2 oder 3, **dadurch gekennzeichnet, dass** mindestens ein Hängehalter vorgesehen ist, durch welchen der Versorgungskanal (1) unterhalb einer Decke eines Raums anbringbar ist.

5. Versorgungskanal nach einem der Ansprüche 1 bis 4, **dadurch gekennzeichnet, dass** das Haltemittel für die Versorgungs-und/oder Datenleitung (4) als Durchgangsöffnung in den Spanten (2) gestaltet ist.

6. Versorgungskanal nach einem der Ansprüche 1 bis 4, **dadurch gekennzeichnet, dass** das Haltemittel für die Versorgungs-und/oder Datenleitung (4) als Klemmmittel (20) gestaltet ist

7. Versorgungskanal nach einem der Ansprüche 1 bis 6, **dadurch gekennzeichnet, dass** an dem Versorgungskanal (1) eine Lagereinrichtung (6, 106) vorgesehen ist, an welche mindestens ein Medienelement (8) anbringbar ist.

8. Versorgungskanal nach Anspruch 7, **dadurch gekennzeichnet, dass** die Lagereinrichtung als mindestens eine Führungsschiene (106) gestaltet ist, an welcher das Medienelement (8) verschieblich anbringbar ist.

9. Versorgungskanal nach Anspruch 7 oder 8, **dadurch gekennzeichnet, dass** die Lagereinrichtung (6, 106) in einer Querrichtung des Versorgungskanals (1) mittig angeordnet ist.

10. Versorgungskanal nach einem der Ansprüche 1 bis 9, **dadurch gekennzeichnet, dass** die Spanten (2) spiegelsymmetrisch bezüglich einer Mittelachse gestaltet sind.

11. Versorgungskanal nach einem der Ansprüche 1 bis 10, **dadurch gekennzeichnet, dass** Mittel vorgesehen sind, durch welche Lichtelemente (9) raumseitig an dem Versorgungskanal (1) anbringbar sind.

12. Verfahren zur Bereitstellung mindestens eines Mediums in einem Raum (7), **dadurch gekennzeichnet, dass** in dem Raum (7) unterhalb einer Decke mindestens ein Versorgungskanal (1) nach einem der Ansprüche 1 bis 11 angebracht wird.

13. Verfahren nach Anspruch 12, **dadurch gekennzeichnet, dass** der Versorgungskanal (1) quer zu einer Leitungsrichtung in einem an den Raum (7) angrenzenden Flur angebracht wird.
